# EUROPEAN PATENT SPECIFICATION

(11) **EP 2 577 000 B1**
(45) Date of publication and mention of the grant of the patent: **24.08.2016**
(21) Application number: 11714087.1
(22) Date of filing: 18.03.2011
(51) Int. Cl.: F01K 17/06, F01K 17/04, F01K 7/40

(54) **FEEDWATER STORAGE AND RECIRCULATION SYSTEM AND METHOD**
SPEISEWASSERSPEICHER- UND WASSERRÜCKFÜHRUNGSSYSTEM UND VERFAHREN
SYSTÈME ET PROCÉDÉ POUR STOCKER ET RECIRCULER DE L'EAU D'ALIMENTATION

(30) Priority: 28.05.2010 GB 201008941
(43) Date of publication of application: 10.04.2013
(73) Proprietor: Doosan Babcock Limited, Crawley, Sussex RH10 9AD (GB)
(72) Inventor: MAJUMDAR, Pramurtta Shourjya, Renfrew, Strathclyde PA4 8DJ (GB)
(74) Representative: Wilson, Peter
(86) International application number: PCT/GB2011/050541
(87) International publication number: WO 2011/148152

(56) References cited:
- WO-A2-2005/045316
- DE-C1- 19 853 206
- US-A- 4 555 906

## Description

The invention relates to a feedwater storage and recirculation system and method adapted for use in and to facilitate improved operation of a steam turbine power plant that is provided with a post combustion carbon capture system and to a steam turbine power plant having a post combustion carbon capture system that incorporates such a recirculation system and method.

Most of the energy used in the world today is derived from the combustion of fossil fuels, such as coal, oil, and natural gas. Post-combustion carbon capture (PCC) is a means of mitigating the effects of fossil fuel combustion emissions by capturing CO₂ from large sources of emission such as thermal power plants which use fossil fuel combustion as the power source. The CO₂ is not vented to atmosphere but is removed from flue gases by a suitable absorber and stored away from the atmosphere. Other industrial processes where similar principles might be applicable to capture post-process CO₂ might include removal of CO₂ generated in a process cycle, for example removal of CO₂ from the process flow during production of ammonia, removal of CO₂ from a natural gas supply etc.

It is known that CO₂ can be separated from a gas phase, for example being the flue gas of a thermal power plant, by means of absorption by suitable absorption medium, for example absorbent in liquid phase, typically in aqueous solution. Gas is passed through the absorption medium under conditions of pressure and temperature optimised for removal of substantially all the carbon dioxide. The purified gas is then directed for further processing as necessary. The absorption medium rich in CO₂ is subjected to a stripping process to remove the CO₂ and regenerate the absorption medium.

Typically this process involves regenerative heating of the medium. The CO₂ rich medium is maintained at high temperature, which may be at or near boiling point of an absorbent liquid phase under pressure. The heat necessary is typically obtained when the system is used in association with a thermal power plant by supplying steam from the LP turbine system. At higher temperatures the medium will release the absorbed CO₂. Regenerated medium may be drawn off for reuse. The released CO₂ may then be collected for example for sequestration. The condensate product of the steam used to supply regenerative heat is returned to the steam generation system.

The feed water storage tank in a regenerative feed heating cycle of a thermal power plant maintains thermal equilibrium between water and steam. It operates in conjunction with a deaerator which may be integral or fluidly in series and under the same fluid conditions. With a conventional feed water storage tank/ deaerator this function cannot be performed for condensate returning from post combustion carbon capture plant or the low pressure heaters since saturation pressure corresponding to lowered temperature compared to downstream of low pressure feed water heaters is lower than steam extraction pressure to deaerator.

WO2005/045316 describes a method for separation of CO₂ from the combustion gas from a thermal power plant fired with fossil fuel, wherein the combustion gas from the thermal power plant is used as cooled, compressed and reheated by combustion of natural gas in a combustion chamber to form an exhaust gas, where the exhaust gas is cooled an brought in contact with an absorbent absorbing CO₂ from the exhaust gas to form a low CO₂ stream and an absorbent with absorbed CO₂, and where the low CO₂ stream is heated by means of heat exchanges against the hot exhaust gas leaving the combustion chamber before it is expanded in turbines.

DE19853206 describes a condensate warm-up device in a feed-water vessel of a power station operates by means of steam removal from a turbine with a steam line leading into the lower condensate space of the feed-water vessel and in whose flow is arranged a controlled adjustment device.

It is desirable to develop a system and operational method by which condensate returning from post combustion carbon capture plant can be provided back into the regenerative feed heating cycle in such way that heat generated in the carbon capture process can be utilized in the whole cycle.

In accordance with the invention there is provided a steam turbine power plant having a post-combustion carbon capture plant which uses steam from the power plant as a heat source for regeneration of absorbent and returns condensate from the post-combustion carbon capture plant to the steam turbine power plant with a feed water storage and recirculation system.

The feed water storage and recirculation system comprises:
a feed water storage tank;
a deaerator integral to or fluidly in series with the feed water storage tank;
a steam extraction conduit to convey water/ steam to the feed water storage tank and deaerator after extraction from a turbine of a steam turbine power plant;
a feed water supply conduit to supply feed water from the feed water storage tank to a boiler of a steam turbine power plant;
a low pressure condensate conduit comprising at least a PCC condensate conduit to return condensate from an associated post-combustion carbon capture plant to a location upstream of the deaerator, together with the condensate returning through the low pressure feed water heaters from the condenser;
characterised in that a flow restrictor is provided in the steam extraction conduit between the turbine and the feed water storage tank and deaerator to achieve the required pressure differential to enable the return of the condensate from the PCC plant together with the condensate returning through the low pressure feed water heaters from the condenser; and additional sources of low pressure condensate are supplied as a mixture with condensate from the carbon capture plant via a common low pressure condensate conduit to a return point upstream of the deaerator.

The general principles of the regenerate feed heating cycle which are subject to modification in accordance with the invention will be familiar. The steam extracted from the turbine is passed to a feed water storage tank and deaerator, for example integral with the storage tank. The storage tank may include a suitable level control. The feed water storage tank in the regenerative feed heating cycle maintains thermal equilibrium between water and steam.

Process steam is drawn off to supply an associated post combustion carbon capture plant with a source of motive power and/ or latent heat. In particular, process steam is drawn off to regenerate lean absorbent in a post-combustion carbon capture apparatus using absorbent medium such as absorbent solution, for example to supply latent heat to a reboiler for lean solvent regeneration. Other supplies of auxiliary process steam may be made available for example to the steam turbine auxiliary drive, and to the reclaimer for maintaining solvent properties.

The condensate product of this process steam returned from the post-combustion carbon capture plant is at a temperature which is lower than the saturation temperature corresponding to the pressure in the feed water storage tank which maintains thermodynamic equilibrium between water and steam after being extracted from the steam turbine. Hence, the effect of returning condensate at a point upstream of the deaerator would be to lower the saturation pressure in the feed water storage tank from the steam extraction pressure at the deaerator.

The same effect is encountered even if the return condensate from the PCC Plant is made to transfer heat by means of an indirect contact heat exchanger with a fluid stream taken as a tap-off from the main condensate train (originating from the condenser hot well and flowing through the low pressure heaters into the feed water storage tank/deaerator) and subsequently returned to the main condensate train upstream of the deaerator.

A purpose of this invention is to address the problem of lowering the saturation pressure in the feed-water storage tank as a result of the effect of heat addition of the condensate returning from the post combustion carbon capture plant, whether by direct mixing with the main condensate train or by indirect contact heat exchange with the main condensate train.

In accordance with the invention a pressure differential has to be maintained between the steam extraction pressure prevalent in the steam turbine and the reduced saturated pressure necessary to maintain equilibrium in the feed water storage tank corresponding to the reduced temperature of the condensate returning from the post combustion carbon capture plant, and optionally additionally other LP sources such as the low pressure heaters.

The introduction of a flow restrictor in the extraction line to the deaerator achieves the necessary pressure drop between the steam extraction pressure prevalent in the steam turbine and the reduced saturated pressure necessary to maintain equilibrium in the feed water storage tank corresponding to the reduced temperature of the mixed condensate returning from the low pressure heaters and post combustion carbon capture plant. It thereby maintains the required level of liquid level in the feed water storage tank for all regimes of operation due to varying pressures of steam extraction as a function of load and variation of temperature of the condensate returning from post combustion carbon capture plant.

It is considered that introduction of the flow restricting device is necessary for the operation of the regenerative feed heating cycle because the failure to incorporate this device would drastically reduce the pressure in the deaerator corresponding to a point much farther downstream in the steam turbine expansion line (towards the final stages of the low pressure steam turbine). This prevents the expansion of steam for meaningful power generation and results in exceeding the conventional design limits of components for power generation thereby jeopardising the functional integrity of power plant operation.

Any suitable flow restrictor can be incorporated into the steam extraction conduit upstream of the feed water storage tank, provided that it can be modulated to maintain the necessary pressure drop and thereby maintain the required level of liquid in the feed water storage tank for all regimes of operation. The flow restrictor is for example a valve. The flow restrictor may for example be either a control valve, or a globe valve with a suitably shaped and actuated plug, or a butterfly valve with a suitably shaped and actuated disk, or a non-return valve with a suitably shaped and actuated restriction.

By provision of such a flow restrictor, it becomes possible to recirculate the condensate from the post-combustion carbon capture plant to a location upstream of the deaerator in a manner which increases the heat rate benefit and ensures that heat generated in the carbon capture process is more effectively used in the whole cycle.

In accordance with the invention, additional sources of low pressure condensate are additionally supplied to a return point upstream of the deaerator as a mixture with condensate from the carbon capture plant via a common low pressure condensate conduit or separately. Again, the provision of the flow restrictor in the steam extraction conduit maintains the required pressure differential to allow this. Suitable additional sources of low pressure condensate might be condensate from the LP heaters, condensate from a condenser extraction pump etc.

At its broadest, the invention relates to a modified feed water storage and recirculation system for use in the regenerative heating cycle of a steam power plant which is modified by provision of a flow restrictor in the steam extraction conduit. This enables the additional modification to supply low pressure condensate, comprising at least condensate from the process steam supplied to post-combustion carbon capture plant for example to be used at least as a source of regenerative heat to the, to a location upstream of the deaerator and for example to a feed water storage tank with integral deaerator. The invention is not specifically limited to any particular configurations of such an arrangement, which will be familiar to those skilled in the art. In particular, the provision of additional features known in prior art regenerative heating systems, an additional means to combine the system of the invention into a thermal power plant, can be envisaged within the scope of the invention.

In a second aspect, the invention may comprise a method of modification of a feed water storage and recirculation system for the regenerative feed heating cycle of a steam turbine power plant, comprising the steps of incorporating a flow restrictor into the steam extraction conduit and providing a conduit to return low pressure condensate at least comprising condensate from an associated PCC system to a location upstream of the deaerator feed associated with a feed water storage tank of the said feed water storage and recirculation system (and for example to a feed water storage tank with integral deaerator) to produce a system as above described.

The invention is suitable for both green field projects and retro-fitting on a brown field project. Substantial parts of existing plants can be left untouched with no necessity for modification. In consequence in the preferred case the second aspect of the invention comprises a method of after-market modification of existing plant in situ.

The person skilled in the art will be familiar with suitable power plant and PCC plant systems. The invention is not particularly limited to any such system, save that it requires that the absorbent medium used in the PCC system is thermally regenerated and the source of heat for such regeneration is steam from the turbine, the condensate product of which is then recirculated in accordance with the principles of the first aspect of the invention.

The post-combustion carbon capture system may for example comprise an absorber column where CO₂ is separated from the flue gas by means of absorption by passing the gas through a column where the gas flows in an opposite direction to an absorbent in liquid phase, typically in aqueous solution.

The post-combustion carbon capture system may for example further comprise a regeneration column where CO₂ is removed from absorbent by regenerative heating, for example to at or near boiling point of an absorbent liquid phase under pressure. A suitable heating means is for example a condenser reboiler as is familiar. Again, as is familiar, this condenser reboiler is disposed to receive solution that has passed through a process volume, for example via an outlet towards the bottom of a column, and reboil the solution to regenerate lean absorbent.

Conveniently, LP steam is used to supply latent thermal energy for the above processes. It is a particular advantage of the invention that the thermal energy of the resultant condensate can be more effectively recovered.

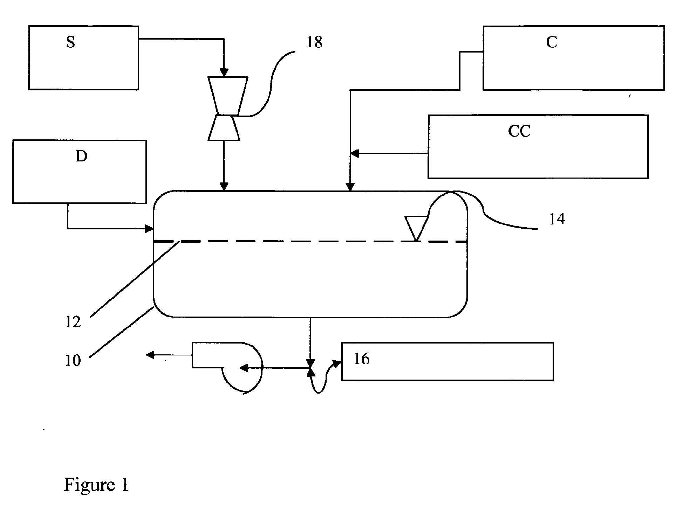

The invention will now be described by way of example only with reference to Figure 1 of the accompanying drawings, which is a schematic of an embodiment of feed water system in accordance with the invention.

The figure is general schematic of the feed water storage tank and associated water/steam feeds from various sources within and conventional external to the regenerative feed heating cycle.

In the illustrated embodiment, a feed water storage tank 10 is provided with an integral deaerator. The invention is not limited to such a deaerator. The invention is not limited to such deaerator, which may be provided in separate form, but downstream of the flow restrictor valve. The feed water storage tank includes a level control to maintain the water/steam contents at an equilibrium level 12.

The steam extracted from the turbines is drawn in conventional manner in a regenerative cycle through the feed water storage tank, and constitutes a feed water supply via the boiler feed pump suction 16.

The invention differs from prior art systems in two respects. First, condensate from the carbon capture plant CC is returned to the system at a location which is upstream of the deaerator (and therefore downstream of the LP heaters). In the illustrated embodiment, other low pressure condensate C, which might for example be condensate from the LP heaters and/or condensate from condenser extraction pump is also returned via this route. Although in the illustrated embodiment a conduit is shown opened directly into the feed water storage tank, the essence of the invention is the return of the post combustion carbon capture condensate (and other LP condensate) to any location which is upstream of the deaerator.

Such a returning condensate is at a temperature which is lower than the saturation temperature corresponding to the pressure in the feed water storage tank which would be necessary to maintain thermodynamic equilibrium between water and steam. The required additional pressure differential is provided by installation of a valve in the steam extraction conduit to the deaerator. The valve 18 can be modulated to achieve the necessary pressure to maintain stable operation.

The figure thus shows the basic elements necessary for the maintenance of Level Control in the Feed Water Storage Tank 10 as a result of thermodynamic equilibrium achieved by reduction of Steam Extraction S pressure to the deaerator by the modulating valve 18, together with condensate returning from low pressure heaters C and post combustion carbon capture plant CC and the drain from high pressure heaters D. The suction to the boiler feed pump 16 is taken from the Feed Water Storage Tank 10.

This method ensures the maintenance of thermal equilibrium in the feed water storage tank when condensate from the post combustion carbon capture plant is returned at any point upstream of the deaerator.

This method provides the necessary modulation of pressures to maintain the required level of liquid level in the feed water storage tank for all regimes of operation due to varying pressures of steam extraction as a function of load and variation of temperature of the condensate returning from post combustion carbon capture plant.

This method improves the Heat Rate of the thermal power station by returning the condensate from the post combustion carbon capture plant at the most optimum location in the regenerative feed heating cycle.

## Claims

1. A steam turbine power plant having a post-combustion carbon capture plant which uses steam from the power plant as a heat source for regeneration of absorbent and returns condensate from the post-combustion carbon capture plant to the steam turbine power plant comprising a feed water storage and recirculation system, wherein said system comprises:
a feed water storage tank (10);
a deaerator integral to or fluidly in series with the feed water storage tank;
a steam extraction conduit to convey water/ steam to the feed water storage tank and deaerator after extraction from a turbine of a steam turbine power plant;
a feed water supply conduit to supply feed water from the feed water storage tank to a boiler of a steam turbine power plant;
a low pressure condensate conduit comprising at least a PCC condensate conduit to return condensate (C) from an associated post-combustion carbon capture plant (CC) to a location upstream of the deaerator, together with the condensate returning through the low pressure feed water heaters from the condenser;
**characterised in that**:
a flow restrictor (18) is provided in the steam extraction conduit between the turbine and the feed water storage tank (10) and deaerator; and additional sources of low pressure condensate are supplied as a mixture with condensate from the carbon capture plant (CC) via a common low pressure condensate conduit to a return point upstream of the deaerator.

2. A power plant in accordance with claim 1 wherein the deaerator is integral with the feed water storage tank (10).

3. A power plant in accordance with claim 1 or claim 2 wherein the storage tank includes a suitable level control (12).

4. A power plant in accordance with any preceding claim wherein the flow restrictor is a valve (18).

5. A power plant in accordance with claim 4 wherein the flow restrictor (18) is selected from: a control valve, a globe valve with a suitably shaped and actuated plug, a butterfly valve with a suitably shaped and actuated disk, a non-return valve with a suitably shaped and actuated restriction.

6. A plant in accordance with any preceding claim wherein the post-combustion carbon capture system (CC) comprises an absorber column where CO₂ is separated from the flue gas by means of absorption by passing the gas through a column where the gas flows in an opposite direction to an absorbent in liquid phase.

7. A plant in accordance with claim 6 wherein the post-combustion carbon capture system (CC) further comprises a regeneration column where CO₂ is removed from absorbent by regenerative heating.

8. A plant in accordance with claim 7 comprising a condenser reboiler disposed to receive absorbent solution and reboil the solution to regenerate lean absorbent.

9. A method of modification of a feed water storage and recirculation system for the regenerative feed heating cycle of a steam turbine power plant, comprising the steps of incorporating a flow restrictor into the steam extraction conduit and providing a conduit to return low pressure condensate at least comprising condensate from an associated PCC (post-combustion carbon capture) system together with the condensate returning through the low pressure feed water heaters from the condenser to a location upstream of the deaerator feed associated with a feed water storage tank of the said feed water storage and recirculation system to produce a system in accordance with any preceding claim.

10. The method of claim 9 performed as a method of after-market modification of existing plant in situ.

## Patentansprüche

1. Ein Dampfturbinenkraftwerk mit einer Anlage zur Kohlenstoff-Abscheidung nach der Verbrennung, die Dampf von dem Kraftwerk als eine Wärmequelle zur Regeneration von absorbierendem Stoff verwendet und Kondensat von der Anlage zur Kohlenstoff-Abscheidung nach der Verbrennung an das Dampfturbinenkraftwerk zurückführt, beinhaltend ein Speisewasserspeicherungs- und Kreislaufsystem, wobei das System Folgendes beinhaltet:
einen Speisewasserspeicherungstank (10);
einen Entgaser, der ein Bestandteil des Speisewasserspeicherungstanks ist oder
fluidmäßig in Reihe mit diesem steht;
ein Dampfextraktionsrohr, um nach der Extraktion von einer Turbine eines Dampfturbinenkraftwerks Wasser/Dampf an den Speisewasserspeicherungstank zu leiten;
ein Speisewasserlieferungsrohr, um Speisewasser von dem
Speisewasserspeicherungstank an einen Kessel eines Dampfturbinenkraftwerks zu liefern;
ein Niederdruckkondensatrohr, das mindestens ein PCC-Kondensatrohr beinhaltet, um Kondensat (C) von einer zugehörigen Anlage zur Kohlenstoff-Abscheidung nach der Verbrennung (CC) an eine Stelle stromaufwärts des Entgasers zurückzuführen, zusammen mit dem Kondensat, das von dem Kondensator durch die Niederdruckspeisewassererhitzer zurückgeführt wird;
**dadurch gekennzeichnet, dass**:
ein Durchflussbegrenzer (18) in dem Dampfextraktionsrohr zwischen der Turbine und dem Speisewasserspeicherungstank (10) und dem Entgaser bereitgestellt ist; und
zusätzliche Quellen von Niederdruckkondensat als eine Mischung mit Kondensat von der Anlage zur Kohlenstoff-Abscheidung (CC) über ein gemeinsames Niederdruckkondensatrohr an einen Rückführungspunkt stromaufwärts des Entgasers geliefert werden.

2. Kraftwerk gemäß Anspruch 1, wobei der Entgaser ein Bestandteil des Speisewasserspeicherungstanks (10) ist.

3. Kraftwerk gemäß Anspruch 1 oder Anspruch 2, wobei der Speicherungstank eine geeignete Niveauregulierung (12) umfasst.

4. Kraftwerk gemäß einem der vorhergehenden Ansprüche, wobei der Durchflussbegrenzer ein Ventil (18) ist.

5. Kraftwerk gemäß Anspruch 4, wobei der Durchflussbegrenzer (18) aus Folgendem ausgewählt ist: einem Steuerventil, einem globalen Ventil mit einem auf geeignete Weise geformten und angetriebenen Stopfen, einem Schmetterlingsventil mit einer auf geeignete Weise geformten und angetriebenen Scheibe, einem Rückschlagventil mit einer auf geeignete Weise geformten und angetriebenen Restriktion.

6. Kraftwerk gemäß einem der vorhergehenden Ansprüche, wobei das System zur Kohlenstoff-Abscheidung nach der Verbrennung (CC) eine Absorptionsmittelsäule beinhaltet, bei der C02 durch Absorption durch das Leiten des Gases durch eine Säule, wo das Gas in eine entgegengesetzte Richtung zu einem absorbierenden Stoff in Flüssigphase fließt, von dem Rauchgas getrennt wird.

7. Kraftwerk gemäß Anspruch 6, wobei das System zur Kohlenstoff-Abscheidung nach der Verbrennung (CC) ferner eine Regenerationssäule beinhaltet, bei der CO2 durch regeneratives Erhitzen von dem absorbierenden Stoff entfernt wird.

8. Kraftwerk gemäß Anspruch 7, das einen Kondensatorverdampfer beinhaltet, der angeordnet ist, um Lösung des absorbierenden Stoffs aufzunehmen und die Lösung neu aufzukochen, um gasarmen absorbierenden Stoff zu regenerieren.

9. Ein Verfahren der Modifikation eines Speisewasserspeicherungs- und Kreislaufsystems für den regenerativen Speiseheizzyklus eines Dampfturbinenkraftwerks, das die folgenden Schritte beinhaltet: Eingliedern eines Durchflussbegrenzers in das Dampfextraktionsrohr und Bereitstellen eines Rohrs, um Niederdruckkondensat, das mindestens Kondensat von einem zugehörigen System zur Kohlenstoff-Abscheidung nach der Verbrennung (PCC-System) beinhaltet, zusammen mit dem Kondensat, das durch die Niederdruckspeisewassererhitzer von dem Kondensator an eine Stelle stromaufwärts der einem Speisewasserspeicherungstank des Speisewasserspeicherungs- und Kreislaufsystems zugehörigen Entgaserspeisung zurückgeführt wird, zurückzuführen, um ein System gemäß einem der vorhergehenden Ansprüche herzustellen.

10. Verfahren gemäß Anspruch 9, durchgeführt als ein Verfahren der Nachmodifikation eines existierenden Kraftwerks vor Ort.

## Revendications

1. Une centrale électrique à turbine à vapeur ayant une centrale de capture de carbone post-combustion qui utilise de la vapeur provenant de la centrale électrique comme source de chaleur pour la régénération d'absorbant et renvoie un condensat de la centrale de capture de carbone post-combustion à la centrale électrique à turbine à vapeur comprenant un système de stockage et de recirculation d'eau d'alimentation, dans laquelle ledit système comprend :
un réservoir de stockage d'eau d'alimentation (10) ;
un dégazeur solidaire à ou en série fluidiquement avec le réservoir de stockage d'eau d'alimentation ;
un conduit d'extraction de vapeur pour acheminer de l'eau/de la vapeur au réservoir de stockage d'eau d'alimentation et au dégazeur après extraction d'une turbine d'une centrale électrique à turbine à vapeur ;
un conduit de fourniture d'eau d'alimentation pour fournir de l'eau d'alimentation du réservoir de stockage d'eau d'alimentation à une chaudière d'une centrale électrique à turbine à vapeur ;
un conduit de condensat basse pression comprenant au moins un conduit de condensat PCC pour renvoyer du condensat (C) d'une centrale de capture de carbone (CC) post-combustion associée à un emplacement en amont du dégazeur, de pair avec le fait que le condensat est renvoyé à travers les appareils de chauffage à eau d'alimentation basse pression à partir du condenseur ;
**caractérisée en ce que** :
un limitateur de débit (18) est prévu dans le conduit d'extraction de vapeur entre la turbine et le réservoir de stockage d'eau d'alimentation (10) et le dégazeur ; et des
sources supplémentaires de condensat basse pression sont fournies sous la forme d'un mélange avec du condensat de la centrale de capture de carbone (CC) par le biais d'un conduit de condensat basse pression commun à un point de retour en amont du dégazeur.

2. Une centrale électrique conformément à la revendication 1 dans laquelle le dégazeur est solidaire du réservoir de stockage d'eau d'alimentation (10).

3. Une centrale électrique conformément à la revendication 1 ou la revendication 2 dans laquelle le réservoir de stockage inclut un contrôle de niveau adéquat (12).

4. Une centrale électrique conformément à n'importe quelle revendication précédente dans laquelle le limitateur de débit est une valve (18).

5. Une centrale électrique conformément à la revendication 4 dans laquelle le limitateur de débit (18) est sélectionné parmi : une valve de contrôle, une valve sphérique avec un bouchon actionné et formé de façon adéquate, une valve papillon avec un disque actionné et formé de façon adéquate, une valve de non-retour avec une restriction actionnée et formée de façon adéquate.

6. Une centrale conformément à n'importe quelle revendication précédente dans laquelle le système de capture de carbone (CC) post-combustion comprend une colonne d'absorbeur où du CO₂ est séparé du gaz de carneau au moyen d'une absorption en faisant passer le gaz à travers une colonne où le gaz s'écoule dans une direction opposée par rapport à un absorbant en phase liquide.

7. Une centrale conformément à la revendication 6 dans laquelle le système de capture de carbone (CC) post-combustion comprend en outre une colonne de régénération où du CO₂ est retiré d'un absorbant par chauffage régénératif.

8. Une centrale conformément à la revendication 7 comprenant un rebouilleur condenseur disposé pour recevoir une solution d'absorbant et rebouillir la solution pour régénérer un absorbant pauvre.

9. Une méthode de modification d'un système de stockage et de recirculation d'eau d'alimentation pour le cycle de chauffage d'alimentation régénératif d'une centrale électrique à turbine à vapeur, comprenant les étapes consistant à incorporer un limitateur de débit dans le conduit d'extraction de vapeur et prévoir un conduit pour renvoyer du condensat basse pression au moins comprenant du condensat d'un système PCC (capture de carbone post-combustion) associé de pair avec le fait que le condensat est renvoyé à travers les appareils de chauffage d'eau d'alimentation basse pression du condenseur à un emplacement en amont de l'alimentation de dégazeur associé à un réservoir de stockage d'eau d'alimentation dudit système de stockage et de recirculation d'eau d'alimentation pour produire un système conformément à n'importe quelle revendication précédente.

10. La méthode de la revendication 9 effectuée comme une méthode de modification après fabrication d'une centrale existante in situ.
